Europäisches Patentamt

**European Patent Office**

Office européen des brevets

(11) Publication number: **0 038 720**
**A1**

(12) **EUROPEAN PATENT APPLICATION**

(21) Application number: **81301774.6**

(22) Date of filing: **22.04.81**

(51) Int. Cl.³: **G 01 N 31/08**

(30) Priority: **22.04.80 US 142687**

(43) Date of publication of application:
**28.10.81 Bulletin 81/43**

(84) Designated Contracting States:
**CH DE FR GB LI NL**

(71) Applicant: **DIONEX CORPORATION**
**1228 Titan Way**
**Sunnyvale California 94086(US)**

(72) Inventor: **Rich, William E., Jr.**
**905 West Middlefield Road**
**Mountain View California 94043(US)**

(72) Inventor: **Johnson, Edward L.**
**449 Gemma Drive**
**Milpitas California 95035(US)**

(74) Representative: **Allard, Susan Joyce et al,**
**BOULT, WADE & TENNANT 27 Furnival Street**
**London EC4A 1PQ(GB)**

(54) **Liquid chromatography apparatus and method employing ion concentration.**

(57) Apparatus and method for chromatographic separation and quantitation of different ions of like charges in a sample, e.g., cations or anions. Referring to anion separation, a sample including at least one highly ionized (strong) weak anion and at least two poorly ionized (weak) cations (or vice versa) is directed with a developing reagent through an ion exchange separation column in which the weak anions, separated as a group from the strong ones, are directed to a suppressor ion exchange bed in which the developing reagent is converted to a weakly ionized form. The strong acids are directed to an anion concentrator column which retains the anions but passes the remainder of the solution. Thereafter, the weak anions are dissolved in a developing reagent and separated on a chromatographic separation column. The resolved anions are then directed to a detector. If the detector is of the type employing a conductivity cell, the solution is passed through a second suppressor column prior to the detector.

./...

FIG.—1

A-35635/DJB

-1-

# LIQUID CHROMATOGRAPHY APPARATUS
# AND METHOD EMPLOYING ION CONCENTRATION

## Background of the Invention

The present invention relates to the quantitative analysis of a plurality of anions or cations in a single system, and more specifically to the use of multiple chromatographic separation columns interconnected by an ion concentrator column.

In the above identified patent application, a system is illustrated for the separation of multiple cations or anions using a combined system of chromatographic separation columns interconnected by a concentrator column. That patent application describes the first separation column in series of the ion exclusion type which serves to separate weak ions from each other and from strong ions as a group. The strong ions may be concentrated on an ion concentrator column with the remainder of the solution passed to waste. Thereafter they are removed from the separation column by a developing reagent and separated on a chromatographic separation column as of the ion exchange type. The eluted ions are then passed through a suppressor column to remove a a developing reagent as background and then through a conductivity cell for measurement.

## Summary of the Invention and Objects

It is an object of the invention to provide a technique for the quantitative analysis of strong and/or cations or anions in a sample solution.

It is a further object of the invention to provide a technique capable of such analysis at low concentration levels.

It is a specific object of the invention to provide a technique using combinations of chromatographic separation columns with an intermediate ion concentrator column.

It is a particular object of the invention to provide a chromatographic system particularly suitable for the analysis of substituted aromatic organic acids (e.g., catecholic acids), and weak inorganic acids (e.g., nitrite).

Further objects and features of the invention will be apparent from the following description taken in conjunction with the appended drawings.

In accordance with the above objects, a system is provided for chromatographic quantitation of a number of ionic species of all positive or all negative charge which utilizes a combination of a first chromatographic separation column and a second chromatographic separation column interconnected by an ion conentrator column. Referring to the quantitation of anions, in one system the sample contains at least a first weak anion and at least a first and second strong anion which are directed through an ion exchange chromatographic column together with a developing reagent. In that column, the two strong anions are resolved from each other and from the weak anion. The anions and developing reagent are then directed through a suppressor column to remove the ionized developing reagent and are passed to an ion concentrator column in timed sequence with separated strong and weak anion fractions where they are retained. Thereafter, the developing reagent is passed through the concentrator column to dissolve the first anion fraction, the weak anions, and the solution is directed through a second chromatographic column where they are resolved from each other and finally the strong anions are detected. The strong ion fraction is then passed to the concentrator column, removed, and analyzed in a similar manner. If such detection is performed by a conductivity detector, prior to detection the ions are passed through a second suppressor column to suppress ionization of the developing reagent.

Brief Description of the Drawing

The sole figure is a schematic representation of a flow system in accordance with the present invention.

Detailed Description of the Preferred Embodiments

The system of the present invention may be employed to determine a large number of strong and/or weak ionic species so long as the species to be determined are solely anions or cations. Such ionic species (e.g., anions) are normally asscciated with counterions but only ionic species of one charge are determined by the present method. Suitable samples include surface waters, including salt water, and

-4-

other liquid such as industrial chemical waste streams, body fluids, such as serum and urine, and beverages such as fruit juices and wines. Covalent molecular compounds, such as amines, are often convertible to ionic form as by forming acid salts which thus renders them capable of analysis according to the present invention.

Analysis is typically performed in an aqueous medium. However, it may also be performed in non-aqueous solvents provided that the solvents are highly polar. Example of suitable nonaqueous medium includes the lower alcohols having from 1 to 4 carbon atoms and acetonitrile.

As defined herein, "weak anions" are anions which, in acid form, are ionized and have a relatively high $pK_A$ value (e.g., about 2 to 7 ) and which are resolved by ion exclusion chromatography, in comparison to "strong anions" which are defined to be highly ionized in acid form, and have a relatively low $pK_A$ value (e.g., 0 to about 2) and which are not resolved by ion exclusion chromatography.

As further defined herein, "weak cations" are cations which, in base form, are poorly ionized, have a relatively high $pK_B$ value (e.g., about 2 to 7), and which are resolved by ion exclusion chromatography, in comparison to "strong cations" which are defined to be highly ionized in base form, have a relatively $pK_B$ (e.g., 0 to about 2), and which are not resolved by ion exclusion chromatography. These numerical limits of strong and weak ions may be varied in certain circumstances so long as the functional characteristics of the ions are satisfied. As further defined, "weak ionic species" are either weak anions or cations depending on whether or not the system is used for their separation; while "strong ionic species" are defined in an analogous manner.

Typical weak anions include mono-, di- and tri-carboxylate groups (e.g., formates and acetates), carbonates, alkyl sulfonic acid, phosphonic acids, and phosphoric acids. The system is particularly effective for the analysis of weak anions of the substituted aromatic organic acid type, e.g., vanilmandelic acid found in human urine, and weak inorganic acids, e.g., nitrite and Krebs cycle acids found in soy protein.

Typical strong anions include strong mineral acids and specifically include halides, sulfate, chlorate, and nitrate.

Typical weak cations include primary, secondary and tertiary amines, and ammonia.

Typical strong cations include alkali metals, and alkaline earth metals.

While the present technique may be employed to quantitatively analyze anions or cations, unless otherwise specified, for simplicity of description, the present application will refer to anions as the ionic species to be analyzed.

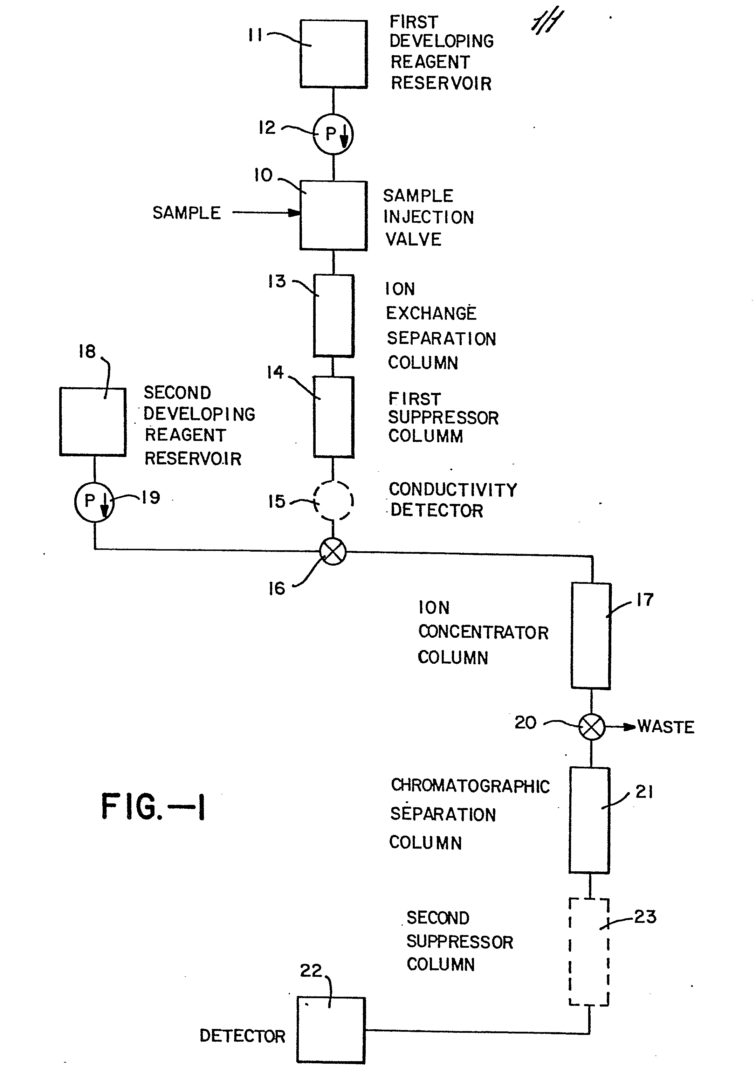

Referring to Figure 1, sample is supplied to the system suitably by a syringe (not shown) at sample injection valve 10. The sample is carried through the system by an eluent drawn from reservoir 11 by pump 12 which thereafter passes into an ion exchange chromatographic separation column 13. In general, the weak anions are separated from the strong anions on column 13, the weak cations passing first from the column. Thereafter, the eluent is passed through a first suppressor column 14 in which a developing reagent either is retained at ion exchange sites or is converted to weakly or substantially non-ionized molecular form. The eluent from this column is optionally directed through a conductivity detector 15 which includes a conductivity cell and readout means (not shown) consisting of conductivity meter and a recorder. This cell serves a dual function. Firstly, it can be used to quantitate ions which have been sufficiently isolated on column 13. Secondly, its readings can be used to provide the desired timing sequence for valve 16. Thereafter, the eluent is passed to an ion concentrator column 17 which includes an ion exchange resin of relatively low capacity to retain anions. During this portion of the cycle, valve 18 is in a position to pass the remaining solution to waste. Should the first fraction from column 13 containing weak anions be collected on concentrator column 17, valve 16 would be closed after passage of that weak anion fraction in response to detection by conductivity detector 15. If desired, means other than timing valve 16 may also be employed. Also, other detectors, such as of the ultraviolet type, may be used in place of conductivity detector 15 for both its quantitative and timing functions.

After retention of the weak anions on concentrator column 17 and passage of the remaining solution to waste, developing reagent from reservoir 18 is drawn by pump 19 through valve 16 which blocks flow from column 13 and passes through ion concentrator column 17 to dissolve the weak anions contained therein and, with valve 20 in a closed position, carries the solution through a chromatographic separation column 21 of a type to be described below. The weak anions are resolved on separation column 21 and are then passed to a detector 22 also of a type to be described below. Should the detector be of the conductivity cell type, a second suppressor column 23 is interposed between separation column 21 and detector 22 to remove the developing reagent which would otherwise cause unacceptable background interference.

After completion of the separation of weak anions, the above sequence may be repeated for the separation of strong anions by closing valve 16 to flow from reservoir 18 and opening the valve 16 to flow from separation column 13. The effluent is then passed through concentrator column 17 where the strong anions are retained while the remaining solution passes to waste through valve 20. Then the same sequence that is described above is followed with valve 16 being opened to flow from reservoir 18 and passing through concentrator column 17 with valve 20 being open to separation column 21.

In performing the present method, the sample size is preferably small to facilitate rapid sharp separations and determinations. Also, this avoids overloading separation column 13 so that it is not necessary to employ large volumes of developing reagent which must be stripped in suppressor column 14. Suitable samples are on the order of 0.002 to about 5 ml of a dilute solution containing the ionic species, typically not greater than about 1 to 10% of the ion exchange capacity of separation column 13.

It is noted that the above system may be employed for the separation and quantitation of multiple weak anions or cations and multiple strong anions or cations. Alternatively, the only ions of interest may be the weak anions which are separated as a group from the strong anions which are passed to waste without analysis. The converse is also possible in which the only ions of interest are the strong ions which are separated from each other and from the weak anions on separation column 13. Thereafter, such strong ions may be concentrated on column 17 and eluted with a developing reagent from reservoir 18. This can provide increased precision as the concentration of the ions of interest removed from the concentrator column is increased significantly in comparison to the original concentration on elution from separation column 13. Also, the reagent from reservoir 18 may be carefully selected for increased resolution on separation column 21 in comparison to the reagent used in reservoir 11.

Separation column 13 and suppressor column 14 may be of the same type as described with respect to separator 10 and stripper 11 of Figure 1 in Small et al. U.S. Patent 3,920,297, incorporated at this point by reference. Briefly, the ion exchange resin for separation column 13 is preferably of high performance in its ability to separate ionic species but at the same time is of low specific capacity so that only a small concentration of developing reagent is required to accomplish separation and elution from the resin bed. Suitably, the specific exchange capacity may be in the range of about 0.005 to 0.1 m.eq./g. of resin. For high performance, highly active ion exchange sites are preferably disposed at a surface layer of the resin beads or particles. The preferred separation resin is pellicular in nature with the active sites at or close to the surface of the resin beads. Less preferred are highly cross-linked ion exchange resins which are porous, having active sites along the walls of the pores with the pores providing more accessibility to the ionic species than in gel-type resins. Suitable resins are described in the last-named U.S. patent.

Suppressor columns 14 and 22 are analogous in function to stripper column 11 of Figure 1 in U.S. Patent 3,920,297. The principles of operation of that column, its detailed description, and its relationship and functional characteristics with respect to the separation column are incorporated by reference at this point. This column is of a relatively high specific capacity in comparison to separation column 13. This is because the function of this suppressor column is to preclude passage of the developing reagent in highly ionized form while permitting passage of the ionic species resolved on separation column 13 without substantial interruption. Suitable ion exchange material includes ion exchange resins for analysis of anions such as polystyrene or modified polystyrene cross-linked with divinylbenzene carrying nuclear groups, the latter providing reactive ion exchange sites. The strong cation exchange resins include nuclear sulfonic acid or sulfonate groups along the polymer chains while the weak cation exchange resins carry carboylate groups. The strong base anion exchange resins carry nuclear chloromethyl groups which have been quarternized. The weak base exchange resins carry nuclear primary, secondary or tertiary amine groups.

The nature of the material in suppressor column 14 is determined by the developing reagent to be suppressed. A common developing reagent in anion analysis is sodium carbonate or sodium bicarbonate in aqueous form. For this reagent, a suitable resin is a highly cross-linked polystyrene including sulfonic groups in the hydrogen ion form. The sodium ion is stripped by the developing reagent to form a weakly ionized carbonic acid which elutes from the column in substantially unionized molecular form. Suppressor column 14 serves to permit retention of the anions of interest by concentrator column 17.

If the eluent includes a strong acid for the analysis of anions or a strong base for the analysis of cations to facilitate chromatographic separation on column 13, suppressor column 14 is of a type which removes the anion of the acid or the cation of the base. For example, for hydrochloric acid as the eluent, suppressor column 14 may be a cation exchange resin in the silver ion form while for barium hydroxide as the strong base, the suppressor column may be an anion exchange resin in the sulfate form. In this instance, suppressor column 14 serves as a stripper column to remove such ions.

-10-

One function of conductivity detector 15 is to provide a proper timing for valve 16 so that the desired fractions are isolated on ion concentrator column 17. Another function is to quantitate ions which have been sufficiently separated on column 13. For example, if one weak ion is separated from two strong ions on that column, the weak ion may be quantitated by detector 15 rather than by detector 22. Suitably, the solution passes through a conductivity cell in which the fluctuation in ionic concentration produces an electrical signal in proportion to the amount of ionic material and registered by a conductivity meter. The signal from the meter is directed to a recorder which provides a visible readout. Other detctors, e.g., of the ultraviolet type, may be used in place of the conductivity detector.

Concentrator column 17 may contain ion exchange resin of the same type as separator column 13. Its functions are (1) to retain only the anions of interest while passing the remainder of the solution to waste, and (2) to rapidly release such anions in the presence of developing reagent from reservoir 18 for flow and resolution in separator column 20. Thus, in the anion system, concentrator column 17 may be used to collect the strong acid void volume peak before injection into separation column 20. The amount and capacity of resin in concentrator column 17 is sufficient for retention but not resolution of the ionic species. By way of comparison, concentrator column 17 should have from 2 to 20 times the total ion exchange capacity compared to the ion concentration of the peak to be collected. Another comparison is that the separation column 20 should have at least 10 times the ion exchange capacity of concentrator column 17. While the same type of resin at different capacities can be used for columns 17 and 20, other types of resin may also be employed so long as the same functional characteristics are obtained.

-11-

The use of concentrator column 17 in the present system increases its versatility. Thus, it permits the concentration of ionic species in the absence of its accompanying solution so that upon removal with the developing reagent, there is a minimum disturbance of the equilibrium of the separation column. In addition, if desired, multiple injections of the same sample may be made to supply multiple quantities of ionic species on the concentrator column to be resolved as a composite sample on chromatography separation column 21. This is particularly useful for trace quantities of an ionic species which may be difficult to resolve using a single sample. Also, by use of multiple concentrator columns (not shown) and/or appropriate adjustment of the valving, it is possible to resolve predetermined highly specific peaks by repeated runs of preselected ionic species.

Chromatographic separation column 21 may be of any type designed to provide the desired chromatographic separation of strong or weak anions or cations. Thus, it may include ion exchange resin of the same type as set out with respect to column 13. However, such ion exchange resin generally is not totally effective for the separation of weak ions. Thus a preferred form of separation on column 20 is performed by ion exclusion chromatography. The principles of separation, as set out in the aforementioned patent application Serial No. 075,260, are incorporated at this point by reference. Briefly summarized, an accepted theory of separation is that the resin network serves as a boundary, which behaves as a semi-permeable membrane, between the interstitial liquid between the resin particles and the occluded liquid inside the resin. Due to Donnan exclusion, highly ionized molecules such as strong mineral acids are excluded from the column particles and passed directly through the column and the void volume peak. Weakly ionic molecules, such as many carboxylic acids and other organic acids and their salts,

-12-

e.g., acetate and formate, may enter the resin phase in acid form and are retained by the resin for later elution than strong acids. An analogous system is employed for weak cations.

For the ion exclusion type of separation column 20, the resin employed is of a type in which the dominant retentive force is penetration of the weak acid in molecular form into the interior of the resin for retention there for a time until elution in the eluent stream in inverse order to such retention forces. This effect dominates over any ion exchange effect. To permit this to occur, the pore size of the resin is preferably relatively large to permit penetration of such molecules. One suitable substrate is a surface sulfonated copolymer styrene and divinylbenzene having about 1 to 8% divinylbenzene cross-linking. Suitable ion exchange groups for anion analysis include sulfonate and for cation analysis include trimethylammonium or similar quarternary ammonium type resins. A suitable specific exchange capacity of the resin particles is on the order of 0.1 to 5 m. eq./g. of resin.

As set out above, the ion exclusion resin for anion separation may be in the hydrogen ion form which permits conversion of the weak acids to their non-ionized molecular form. In addition, it causes stripping of cations which could provide interference background for a conductivity salt type of detector 21 as set out below.

Another type of ion exclusion resin is of the non-ionic type in which the counter-ions in the sample are converted to acid form through the separation of anions or to base form for the separation of cations. Chemically bound hydrocarbon chains (alkyl groups) attached to silica substrates are one common form of stationary phase used in reverse phase liquid chromatography (RPLC), one form of separation. Here, chemically bonded hydrocarbon chains (alkyl groups) attached to silica substrates are typically used as the stationary phase. Suitable ones include those supplied under the trade designation, $\mu$-Bondapak C-18 by Water Associates. The mode of formation of such stationary phases and suitable techniques for performing RPLC are known as set out, for example, in N.H.C. Cook and K. Olsen, Am. Lab. 45 (August, 1979). In this technique, a salt is added to the mobile phase to improve the chromatographic properties. Briefly summarized, in a typical instance the sample is directed in an aqueous polar mobile phase, commonly including a lower alcohol, acetonitrile, or other water miscible organic solvent, together with a counter-ion, typically tetrabutylammonium ion for anion analysis. The technique has been used with typical detectors such as of the ultra violet, fluorescence and refractive index type. The separated eluent from this column may be also analyzed by a conductivity detector of the same type as detector 15 so long as the counter-ion is removed prior to detection. The principle of operation of a system of this type is set out in Pohl patent application entitled "Chromatographic Separation and Quantitative Analysis of Ionic Species," Serial No. 128,836, filed March 10, 1980, incorporated at this point by reference.

In another type of system similar to the foregoing one, a non-ionic macroporous resin (e.g., a copolymer of styrene and divinylbenzene sold under the trademark Amberlite XAD-2) is described for use as the stationary phase for RPLC. This type of system is set out in a paper, F.F. Cantwell and S. Puoh, Anal. Chem., 51 No. 6 (May, 1977), 623. The major advantage of this type of resin is that it is stable at extreme pH ranges in contrast to the aforementioned silica-based stationary phase. The use of this type of resin in combination with a conductivity detector such as that described above with respect to conductivity cell 15

-14-

is described in Rich, Jr. et al. Patent entitled "Analysis of Ionic Species Using a Macroporous Chromatographic Resin Separation Medium," Serial No. 128,730, filed March 10, 1980. Here a suppressor column is required for the same purpose set forth above with respect to the Pohl patent application.

Any conventional liquid chromatography detectors 21 may be employed in accordance with the present invention including an anodic or cathodic electrochemical detector, e.g., of the 384-1 model sold by Princeton Applied Research. Another form of detector is an ultra violet detector, e.g., a 254 nm model sold by Varian Associates. Other detectors are of the fluorescence type or of the conductivity type without suppressor column 23.

Detector 22 may comprise a conductivity detector of the same type as detector 15. In that instance, the resolved ionic species must first be passed through a suppressor column 22 of the same type as column 14 which substantially precludes passage of developing reagent in highly ionized form while permitting passage of resolved ionic species without interruption of them. This is required to remove the background of the developing reagent.

A system of the foregoing type is effective for separating and quantitating of electrochemically active compounds such as catecholic acids. One particularly effective system is for the determination of VMA found naturally in urine at ranges between 1 and 5 ppm. In some disease states several magnitudes greater have been observed and so it is advantageous to develop a system for accurately quantitating VMA levels. It has been found that VMA and other electrochemically active acids can be detected in a highly selective manner using a system of the present invention with an anodic or cathodic detector rather than with a suppressor column plus conductivity detector. The preferred detection system for analyzing electrochemically active anions is an anodic electrochemical detector because it is typically at least 10 times as sensitive as the conductometric/suppressor system described above.

A further disclosure of the nature of the present invention is provided by the following specific examples of its practice. It should be understood that the data disclosed serve only as examples and are not intended to limit the scope of the invention.

Example 1

Here, a 3 ml. sample of urine is acidified for stability with 0.5 ml. of 6 molar HCl and 3.0 gm. of NaCl. The mixture is diluted to 6 ml. and then extracted with 30 ml. of ethyl acetate. After shaking for 10 minutes, the ethyl acetate is removed and evaporated to dryness. The residue is reconstituted in 6 ml. of the first developing reagent comprising 0.0005 molar NaI and 0.00001 molar HCl at a pH 5. The same eluent from reservoir 11 is directed at 2.5 ml./min. through the sample and through separation column 13 (dimensions 6 mm. x 230 mm.) including a low capacity type agglomerated resin of 20-30 micron size such as supplied by Dionex Corporation. The sample is then directed through first suppressor column 14 (dimensions 4 mm. x 100 mm.) including a Dowex DX-50 WX16 resin in a silver ion form.

The eluent corresponding to the VMA region was collected on concentrator column 17 of a dimension 4 mm. x 50 mm. containing resin of the same type as set forth above with respect to column 13.

-16-

After trapping on column 17, valve 16 is switched so that the second developing reagent from reservoir 18 is permitted to flow through the concentrator column 17 and to remove the ion. In this instance, such developing reagent is 0.01 mm. HCl and 10% acetonitrile.

Thereafter, the eluent is passed through separation column 20 of dimension 4 mm. x 250 mm. including neutral polystyrene-divinylbenzene resin with 57% cross-linking, 5-10 micron diameter and surface area of 400-500 $m^2$/g.

The eluent from this column is flowed directly to an electrochemical detector of the anodic type in which detection of the phenolic group is optimized. An excellent separation of VMA is obtained.

Example 2

The above procedure is followed with the substitution of chromatrographic separation medium. Here, the medium is a reverse phase column designated RP-8 from Whatman. The developing reagent from reservoir 18 is 50 mm. $NaH_2PO_4$, 5 mm. NaCl, 2% acetonitrile, adjusted to a pH of 2.4 with phosphoric acid. Again, excellent separation is found.

In Example 2, significantly lower concentrations of acetonitrile indicate that the separation medium of Example 1 is more selective than the silica material. Also, due to the nature of the developing reagent from Example 2, chemical stability of the separation medium of Example 1 is preferred.

Example 3

In this example, weak inorganic acids, nitrate and nitrite, are determined in soy protein.

A 1 gm. sample of soy protein is extracted in methanol and filtered to remove particulate matter.

The same resin system is employed. Here the eluent is 0.005 NaCl at a flow rate of 3.5 ml.

The fraction eluting between 0.5 and 3.0 minutes is collected on the concentrator column 17 which is passed to separation column 20 (9 mm. x 300 mm.) containing a totally sulfonated resin of 9.5 micron size. The eluent is 0.01 molar HCl at 0.7 ml./min. The eluent from this column is directed to a second suppressor column of the above type and then to a conductivity detector. In this instance, the first chromatogram illustrates the resolution of nitrite and nitrate while a second chromatogram illustrates the separation of naturally occurring organic acids in soy protein.

0038720

CLAIMS

1. A method of chromatographic separation and quantitative analysis of a plurality of ionic species in a sample solution, all of the species being of positive or negative charge, which method comprises

(a) directing the solution of at least a first weak ionic species, at least a first and second strong ionic species members, and a highly ionized developing reagent through a first chromatographic separation column, the first column containing an ion exchange chromatographic resin in a form to substantially resolve the first weak ionic species member from the first and second strong ionic species members on elution from the column in the eluent,

(b) directing the first and second strong ionic species and developing reagent through a first suppressor column, the first suppressor column containing an ion exchange material of a type which substantially precludes passage of the developing reagent in highly ionized form but which passes the first and second strong ionic species,

(c) then directing the first and second strong ionic species into an ion concentrator column including an ion exchange resin on which the ionic species are retained without substantial resoltion while the unretained solution associated with the ionic species passes through the concentrator column and is removed,

(d) then passing a highly ionized developing reagent through the concentrator column to dissolve the first and second strong ionic species,

(e) directing the first and second strong ionic species and developing reagent solution from step (d) through a second chromatographic separation column, the second column being in a form to substantially resolve at least the first and second strong ionic species on elution, and

(f) detecting the substantially resolved first and second strong ionic species.

2. A method as claimed in claim 1 in which step (f) is performed by

(g) passing the resolved first and second strong ionic species through a second suppressor column containing an ion exchange material of a type which substantially precludes passage of developing reagent in highly ionized form and which permits passage of the resolved first and second strong ionic species without substantial interruption of the resolution, and

(h) directing the resolved first and second strong ionic species from the third resin column through a conductivity cell having associated readout means.

3. A method as claimed in claim 1 or claim 2 in which the detecting is performed by an anodic or cathodic electrochemical detector.

4. A method as claimed in claim 1 or claim 2 in which the detecting is performed by an ultraviolet detector.

5. A method as claimed in any one of the preceding claims in which the sample solution includes at least a second weak ionic species.

6. A method as claimed in any one of the preceding claims which includes the steps of:

(g) separating the first and second strong ionic species from the first and second weak ionic species in the first chromatographic separation column,

(h) directing said at least first and second weak ionic species and first developing reagent through a suppressor column,

(i) directing the first and second ionic species from step (g) into an ion concentrator column,

(j) passing a highly ionized developing reagent through the concentrator column to remove the first and second weak ionic species, and

(k) detecting the substantially resolved first and second weak ionic species.

7. A method as claimed in any one of the preceding claims in which the ionic species are anions.

8. A method as claimed in claim 7 in which the resin in the first chromatographic separation column is an anionic exchange resin.

9. A method as claimed in any one of the preceding claims in which the developing reagent for the first chromatographic separation column is a halide and the suppressor column is in silver ion form.

10. A method as claimed in any one of claims 1 to 8 in which the developing reagent for the first chromatographic separation column is a carbonate and the suppressor column is in hydrogen form.

11. A method as claimed in any one of claims 1 to 6 in which the ionic species are cations.

12. A method as claimed in claim 9 in which the resin in the first chromatographic separation column is a cationic exchange resin.

13. A method as claimed in any one of the preceding claims in which the second chromatographic separation column is a macroporous, hydrophobic chromatographic resin with essentially no permanently attached ion exchange sites.

14. A method as claimed in any one of claims 1 to 12 in which the second chromatographic separation column comprises hydrocarbon chains bonded to a substrate forming a reversed-phase packing.

15. A method as claimed in any one of claims 1 to 12 in which the second chromatographic separation column comprises an ion exchange resin.

16. A method as claimed in any one of the preceding claims which includes the step of detecting the weak ionic species after step (b) and prior to step (c).

17. A method of chromatographic separation and quantitative analysis of a plurality of ionic species in a sample solution, all of the species being of positive or negative charge, which method comprises:

(a) directing the solution of at least a first strong ionic species and at least a first and second weak ionic species and a highly ionized developing reagent thour through a first chromatographic separation column, the first column containing an ion exchange chromatographic resin in a form to substantially resolve the first strong ionic species member from the first and second weak ionic species members on elution from the column in the eluent,

(b) directing the first and second weak ionic species and developing reagent through a first suppressor column, the first suppressor column containing an ion exchange material of a type which substantially precludes passage of the developing reagent in highly ionized form but which passes the first and second weak ionic species,

(c) then directing the first and second weak ionic species into an ion concentrator column including an ion exchange resin on which the ionic species are retained without substantial resolution while the unretained solution associated with the ionic species passes through the concentrator column and is removed,

(d) then passing a highly ionized developing reagent through the concentrator column to dissolve the first and second weak ionic species,

(e) directing the first and second weak ionic species and developing reagent solution from step (d) through a second chromatographic separation column, the second column being in a form to substantially resolve at least the first and second weak ionic species on elution, and

(f) detecting the substantially resolved first and second weak ionic species.

18. A method as claimed in claim 17 which includes the step of detecting the strong ionic species after step (b) and prior to step (c).

24.

0038720

19. Apparatus for the chromatographic separation and quantitative analysis of a plurality of ionic species in a sample solution, all of the species being of a positive or negative charge, which apparatus comprises

(a) a first column including a chromatographic ion exchange resin bed in a form to separate at least a portion of the ionic species in solution,

(b) means for supplying the ionic species sample and developing reagent solution to the first column,

(c) a second column including an ion exchange material of a type and capacity to substantially preclude passage of a developing reagent in highly ionized form to be used to separate ionic species by the first column,

(d) valve means for separating the solution eluting from the second column in timed sequence into multiple fractions containing different ionic species,

(e) a third column including an ion concentrator resin bed of a type to retain ionic species in at least one of the fractions, the total resin in the column being of substantially lower ion exchange capacity than that in the first column,

(f) a fourth column including a chromatographic separation bed,

(g) means for supplying developing reagent to the third column,

(h) first conduit means between the valve means and a third column,

(i) second conduit means between the second and third columns,

(j) third conduit means between the third and fourth columns,

(k) detection means for the ionic species and associated readout means, and

(l) fourth conduit means between the fourth column and the detection means.

20. Apparatus as claimed in claim 19 in which the ion exchange capacity of the first column is at least 10 times that of the third column.

21. Apparatus as claimed in claim 19 or claim 20 in which the detection means is an anodic or cathodic electrochemical detector.

22. Apparatus as claimed in claim 19 or claim 20 in which the detection means is an ultraviolet detector.

23. Apparatus as claimed in claim 19 or claim 20 in which the detection means comprises conductivity

26.

measurement means, and the apparatus includes a fifth
column including an ion exchange resin of a type to
substantially preclude passage of developing reagent in
highly ionized form, the fifth column being disposed
between the fourth column and conductivity measurement
means.

24. Apparatus as claimed in any one of claims 19 to 23
which includes a second detection means for the ionic
species disposed between the second and third columns.

SJA/EA   369

FIG.−1

0038720

## European Patent Office

# EUROPEAN SEARCH REPORT

| DOCUMENTS CONSIDERED TO·BE RELEVANT | | | CLASSIFICATION OF THE APPLICATION (Int. Cl.³) |
|---|---|---|---|
| Category | Citation of document with indication, where appropriate, of relevant passages | Relevant to claim | |
| D | US - A - 3 920 397 (H. SMALL et al.) <br> * claim 48 * <br><br> -- <br><br> ISA TRANSACTIONS, Vol. 18, No. 2, 1979 <br> T. MILLER "On-Stream Ion Chromatography: an Aid to Energy Conservation" <br> pages 59 to 64 <br> * fig. 1 * <br><br> -- | 1 <br><br><br><br> 19 | G 01 N 31/08 |
| A | US - A - 3 926 559 (T.S. STEVENS) <br><br> -- | | TECHNICAL FIELDS SEARCHED (Int. Cl.³) |
| A | US - A - 3 925 019 (H. SMALL et al.) <br><br> -- | | G 01 N 31/00 |
| A | DE - A1 - 2 707 954 (M.H. SIMATUPANG) <br><br> -- | | |
| A | CHEMIE FÜR LABOR UND BETRIEB, Vol. 27 No. 12, 1976 <br> H. KÖNIG "Ionenaustauscher-Verfahren in der Organischen Analyse" <br> pages 471 to 478 <br><br> -- | | |
| A,D | ANALYTICAL CHEMISTRY, Vol. 51, No. 6, 1979 <br> F.F. CANTWELL et al. "Mechanism of Chromatographic Retention of Organic Ions on Nonionic Adsorbent" <br> pages 623 to 632 <br><br> ---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 23-07-1981 | SCHWARTZ |

EPO Form 1503.1  06.78